# EUROPEAN PATENT SPECIFICATION

(11) **EP 0 658 065 B1**
(45) Date of publication and mention of the grant of the patent: **13.10.1999**
(21) Application number: 95102801.8
(22) Date of filing: 14.02.1990
(51) Int. Cl.: H05B 3/06, H05B 3/48

(54) **Cold tail of a tubular heating element with intermediate sleeve**
Anschluss eines Rohrheizkörpers mit einer Zwischenhülse
Cosse de raccordement pour élément de chauffage avec manchon intermédiaire

(30) Priority: 14.02.1989 GB 8903319
(43) Date of publication of application: 14.06.1995
(62) Divisional of application: 90903626.1
(73) Proprietor: ELPAG AG CHUR, CH-7001 Chur (CH)
(72) Inventor: Taylor, John Crawshaw, Arbory, Isle of Man (GB)
(74) Representative: Eisenführ, Speiser & Partner

(56) References cited:
- DE-A- 2 422 681
- FR-A- 2 107 088
- US-A- 2 961 632

## Description

This invention relates to a tubular heating element of the kind which is used in liquid heating vessels or containers such as washing machines, urns, jugs, kettles or the like. Such tubular heating elements are conventionally mounted on an element head by means of which the heating element is mounted in an opening in the vessel or container wall, the heating element being disposed within the vessel or container with the ends thereof however extending through the head and thus being accessible from outside the vessel or container for making of electrical connections to the heating element.

The heating element comprises an outer tubular sheath usually but not necessarily of circular cross-sectional shape of a suitable metal e.g. copper or stainless steel, a ferrous alloy resistance heating wire in the form of a helically wound coil extending axially through the sheat and being spaced therefrom by an electrical insulating material such as magnesium oxide which also serves to conduct heat from the wire to the surrounding sheath and thence to the liquid to be heated.

The heating wire does not extend to the ends of the sheath but rather stops short of the ends and is continued at each end by a so-called "cold tail" i.e. a metal rod of much greater diameter than that of the heating wire and offering by comparison with the heating wire little electrical resistance so as not to be resistively heated in use of the tubular heating element to any significant extent. The cold tails are usually made of mild steel and are welded to the ends of the resistive heating wire. Moreover, the cold tails extend beyond the ends of the sheath of the heater element, the ends of the sheath arround the cold tail being sealed by an electrically insulating and water impervious sealing material e.g. an epoxy resin. The exposed ends of the cold tails thus constitute the electrical terminals of the heating element and electrical connections thereto can be made in any desired manner.

From the European Patent Application 0 086 465 a tubular heating element is known wherein the heating wire is pushed onto and welded on the end of a cold tail being formed by a bolt. In the case that said bolt is of a material with high thermal conductivity it could be possible that during the fastening process of the wire onto said bolt by means of welding or the like, said bolt could be damaged due to its softness so that said wire can be released from said bolt.

It is an object of the present invention to provide a tubular heating element mentioned above with which the fastening of the wire at the cold tail can be occured independently from the materials chosen for the wire and said cold tail.

The object mentioned above is solved by the features of the present claim 1. Due to the use of said intermediate sleeve the cold tail can be of a material with a high thermal conductivity wherein the wire can be fixed safely on said cold tail.

The cold tail can be of copper which has a high thermal conductivity.

Said intermediate sleeve can be of steel which allows a welding process for fixing said resistance heating wire on said intermediate sleeve. The intermediate sleeve can be fixed on the cold tail by pressure.

To arrange said intermediate sleeve on said cold tail it is favourable that said cold tail has a tapered portion onto which said intermediate sleeve can be pushed.

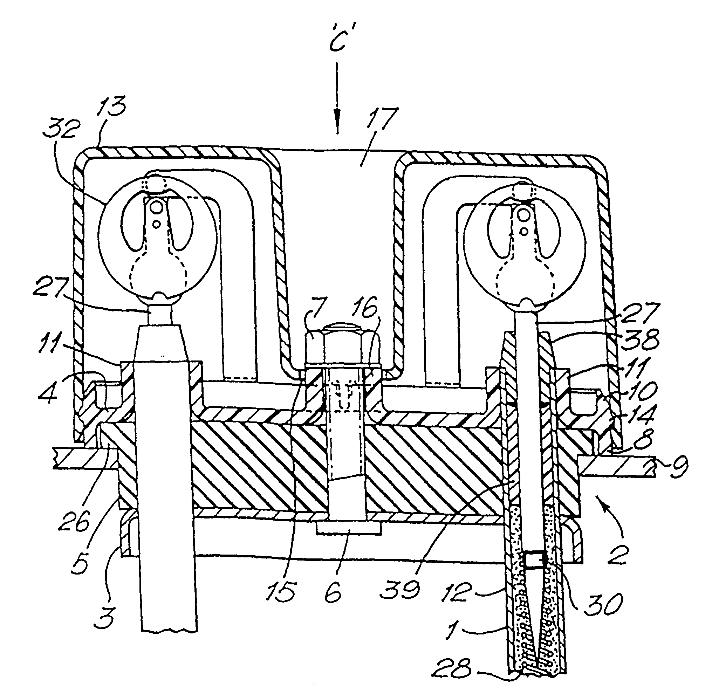

Further advantages and one embodiment is described below in connection with the sole figure.

The figure illustrates a tubular heating element for a washing machine wherein the element 1 is mounted on a head 2 which is mounted in an aperture in the washing machine tub or container.

The head 2 is of a generally well-known kind. It comprises inner and outer clamping plates 3, 4 with a resiliently compressible and radially expansible seal 5 sandwiched therebetween. A headed bolt 6 and nut 7 enable the plates 3, 4 to be drawn together to compress and expand the seal 5 into contact with a surrounding aperture in the wall 9 of the container so as both to mount the heater in the aperture and to form a seal therwith.

The ends of the element 1 extend through the inner plate 3 and are embraced by the seal 5 which when compressed seals around the element ends and also serves to secure the element in the head.

As is conventional, the inner plate 3 is of metal but the outer plate 4 is in this embodiment of the invention a moulding of plastics material and includes a downwardly pointing flange 8 which locates against the container wall 9, an upwardly pointing strengthening flange 10, and raised sleeves 11 which engage with the ends of the element sheath 12. A cover moulding 13 clips over a bead 14 formed around the periphery of the outer plate 4. The cover 13 has an aperture 15 which extends around a mounting boss 16 for the nut 7, and has a well 17 to allow access to the nut 7 for removal of the head 2.

It will be noted that the seal 5 is formed with a peripheral flange 26 which is sandwiched between the container wall 9 and the outer plate 4. The flange 8 formed on the outer plate 4 prevents over-compression of the seal 5 in this area when the nut 7 is tightened on the bolt 6.

The thickness of the seal 5 where it contacts element sheath 12 may be reduced in order to inhibit the radial loss of heat. Likewise the plastics sleeves 11 also assist in reducing the loss of heat from the ends of the element. The construction of the outer plate 4 of plastics material reduces the thermal capacity of the head and again assists in containing heat within the ends of the element. It would also be possible to space the inner plate 3 from the element sheath 12 where it passes through the plate 3 to again reduce the loss of heat from the ends of the element.

Turning to the construction of the element 1, the cold tails or pins 27 extend beyond the ends of the element sheath 12 and the sleeves 11 of the outer plate 4. An insulating plug 38 closes the end of the sheath 12, above an insulating sealing material 39 such as epoxy.

The inner ends of the cold tails 27 are tapered and engage with a helically wound heating wire 28. The heating wire 28 is of a ferrous resistance alloy and is mounted on the cold tail 27 through an intermediate steel sleeve 30. The cold tails 27 are of copper and each is connectd at its outer end to a thermally-responsive snap-action bimetallic actuator 32.

Said intermediate sleeve 30 is pushd onto said tapered portion of said cold tail and is fixed on said tapered portion by pressure. The wire of the resistance heating coil is in this example spot welded on said intermediate sleeve 30.

## Claims

1. A tubular heating element with a helically wound resistance heating wire (28) terminating in at least one cold tail (27),
**characterized in that** said helically wound resistance heating wire (28) is connected to said cold tail (27) of high thermal conductivity via an intermediate sleeve (30) which is pushed over said cold tail (27).

2. The tubular heating element according to claim 1,
**characterized in that**
said cold tail (27) is of copper.

3. The tubular heating element according to claim 1,
**characterized in that**
said intermediate sleeve (30) is of steel.

4. The tubular heating element according to one of the claims 1 to 3,
**characterized in that**
said resistance heating wire (28) is of ferrous resistance alloy.

5. The tubular heating element according to one of the claims 1 to 4,
**characterized in that**
said resistance heating wire (28) is spot-welded onto said intermediate sleeve (30).

6. The tubular heating element according to one of the claims 1 to 4,
**characterized in that**
said resistance heating wire (28) is crimped onto said intermediate sleeve (30).

7. The tubular heating element according to one of the claims 1 to 6,
**characterized in that**
said cold tail (27) has a tapered portion (29) onto which said intermediate sleeve (30) is pushed.

8. The tubular heating element according to one of the claims 1 to 7,
**characterized in that**
said intermediate sleeve (30) is fixed to said cold tail (27) under pressure.

## Patentansprüche

1. Röhrenförmiges Heizelement mit schraubenförmig darumgewickeltem Widerstandsheizdraht (28), das in mindestens einem kalten Ende (27) endet,
**dadurch gekennzeichnet, daß** der schraubenförmig darumgewickelte Widerstandsheizdraht (28) über eine Zwischenhülse (30), die auf das kalte Ende (27) aufgeschoben wird, mit dem kalten Ende (27) verbunden ist, das eine hohe Wärmeleitfähigkeit hat.

2. Röhrenförmiges Heizelement nach Anspruch 1,
**dadurch gekennzeichnet, daß** das kalte Ende (27) aus Kupfer ist.

3. Röhrenförmiges Heizelement nach Anspruch 1,
**dadurch gekennzeichnet, daß** die Zwischenhülse (30) aus Stahl ist.

4. Röhrenförmiges Heizelement nach Anspruch 1 bis 3,
**dadurch gekennzeichnet, daß** der Widerstandsheizdraht (28) aus einer Eisenwiderstandslegierung ist.

5. Röhrenförmiges Heizelement nach Anspruch 1 bis 4,
**dadurch gekennzeichnet, daß** der Widerstandsheizdraht (28) durch Punktschweißung mit der Zwischenhülse (30) verbunden ist.

6. Röhrenförmiges Heizelement nach Anspruch 1 bis 4,
**dadurch gekennzeichnet, daß** der Widerstandsheizdraht (28) durch Crimpen mit der Zwischenhülse (30) verbunden ist.

7. Röhrenförmiges Heizelement nach einem der Ansprüche 1 bis 6,
**dadurch gekennzeichnet, daß** das kalte Ende (27) einen keilförmigen Abschnitt (29) hat, auf den die Zwischenhülse (30) aufgeschoben wird.

8. Röhrenförmiges Heizelement nach einem der Ansprüche 1 bis 7,
**dadurch gekennzeichnet, daß** die Zwischenhülse (30) unter Druck am kalten Ende (27) befestigt wird.

## Revendications

1. Elément de chauffage tubulaire avec un filament de chauffage ohmique enroulé de manière hélicoïdale (28) se terminant en au moins une partie arrière froide (27),
caractérisé en ce que ledit filament de chauffage ohmique enroulé de manière hélicoïdale (28) est relié à ladite partie arrière froide (27) de conductivité thermique élevée au moyen d'un manchon intermédiaire (30) qui est poussé sur ladite partie arrière froide (27).

2. Elément de chauffage tubulaire selon la revendication 1, caractérisé en ce que ladite partie arrière froide (27) est en cuivre.

3. Elément de chauffage tubulaire selon la revendication 1, caractérisé en ce que ledit manchon intermédiaire (30) est en acier.

4. Elément de chauffage tubulaire selon l'une des revendications 1 à 3, caractérisé en ce que ledit filament de chauffage ohmique (28) est un alliage pour résistances électriques ferreux.

5. Elément de chauffage tubulaire selon l'une des revendications 1 à 4, caractérisé en ce que ledit filament de chauffage ohmique (28) est soudé par points sur ledit manchon intermédiaire (30).

6. Elément de chauffage tubulaire selon l'une des revendications 1 à 4, caractérisé en ce que ledit filament de chauffage ohmique (28) est serti sur ledit manchon intermédiaire (30).

7. Elément de chauffage tubulaire selon l'une des revendications 1 à 6, caractérisé en ce que ladite partie arrière froide (27) possède une partie conique (29) sur laquelle est poussé ledit manchon intermédiaire (30).

8. Elément de chauffage tubulaire selon l'une des revendications 1 à 7, caractérisé en ce que ledit manchon intermédiaire (30) est fixé sous pression sur ladite partie arrière froide (27).
